# EUROPÄISCHE PATENTANMELDUNG

(11) **EP 4 116 693 A1**
(43) Veröffentlichungstag der Anmeldung: **11.01.2023**
(21) Anmeldenummer: 22181582.2
(22) Anmeldetag: 28.06.2022
(51) Int. Cl.: G01N 1/22

(54) **BEHÄLTERBEHANDLUNGSANLAGE UND VERFAHREN ZUM ÜBERWACHEN EINER BEHÄLTERBEHANDLUNGSANLAGE**

(30) Priorität: 06.07.2021 DE 102021117428
(71) Anmelder: KRONES AG, 93073 Neutraubling (DE)
(72) Erfinder: RIESCHL, Thomas, 93073 Neutraubling (DE); SOELLNER, Juergen, 93073 Neutraubling (DE)
(74) Vertreter: v. Bezold & Partner Patentanwälte - PartG mbB

(57) **Zusammenfassung**

Die Erfindung betrifft u.a. eine Behälterbehandlungsanlage (10) zum Behandeln von Behältern. In einem Probenentnahmeraum (22) ist mindestens eine Behälterbehandlungsvorrichtung (12, 14, 16, 18) und/oder mindestens ein Behälterförderer (20) angeordnet. Ein Probenentnahmeventil (24) weist einen Gaseinlass (30), der mit einem Inneren des Probenentnahmeraums (22) verbunden ist, und einen Gasauslass (32) zum Entnehmen einer Probe auf. Vorteilhaft kann die Behälterbehandlungsanlage (10) eine verbesserte Überwachung des Probenentnahmeraum (22) ermöglichen.

## Beschreibung

### Technisches Gebiet

Die Erfindung betrifft eine Behälterbehandlungsanlage und ein Verfahren zum Überwachen einer Behälterbehandlungsanlage.

### Technischer Hintergrund

In einer Fülleinrichtung einer Behälterbehandlungsanlage können Behälter mit einem Füllprodukt, z. B. einem Getränk, befüllt werden. Für viele Getränke ist es dabei erforderlich, diese unter aseptischen Bedingungen abzufüllen. Beispielsweise kann ein Sterilisationsprozess für das aseptische Abfüllen mit der Sterilisation der bereits fertig gestellten Behälter in einem dafür vorgesehenen Reinraum beginnen. Es ist bspw. auch möglich, dass bereits das Herstellen der Behälter aus Vorformlingen in einem Reinraum stattfindet.

Die EP 0 794 903 B1 beschreibt ein System und ein Verfahren zum sterilen Verpacken von Getränken. Dabei wird ein Getränkebehälter aus einem geformten Vorformling durch Blasformgebung gebildet, anschließend wird der Behälter mit einem sterilen Getränk befüllt und schließlich der gefüllte Behälter mit einer sterilisierten Verschlusskappe verschlossen.

Zur Überprüfung der Reinraumumgebung auf Keime usw. können die Reinräume Zugangsklappen aufweisen. Zur Überprüfung der Sterilität im Reinraum kann die Produktion unterbrochen und die Zugangsklappe geöffnet werden. Durch die geöffnete Zugangsklappe kann eine Luftprobe in Form einer Luftkeimsammlung entnommen und anschließend analysiert werden.

Der Erfindung liegt die Aufgabe zu Grunde, eine verbesserte Technik zur Überwachung einer Behälterbehandlungsanlage schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft eine Behälterbehandlungsanlage zum Behandeln von Behältern (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Behälterbehandlungsanlage weist einen Probenentnahmeraum auf, in dem mindestens eine Behälterbehandlungsvorrichtung und/oder mindestens ein Behälterförderer angeordnet ist. Die Behälterbehandlungsanlage weist (mindestens) ein (z.B. manuell betätigbares) Probenentnahmeventil auf, das einen Gaseinlass, der mit einem Inneren des Probenentnahmeraums (z. B. direkt angrenzend) verbunden ist, und einen Gasauslass zum Entnehmen einer Gasprobe (z. B. Luftprobe) aufweist.

Vorteilhaft kann das Probenentnahmeventil eine Probenentnahme aus dem Probenentnahmeraum ermöglichen, ohne dass dabei die Umgebung im Probenentnahmeraum, z. B. durch Öffnen einer Zugangsklappe, verändert oder beeinträchtigt wird. Beispielsweise kann der Probenentnahmeraum auch bei Entnahme der Probe weiterhin steril bleiben. Die Probenentnahme kann somit unbeeinflusst von den Umgebungsbedingungen, die um den Probenentnahmeraum herum herrschen, durchgeführt werden. Vorzugsweise kann die Probenentnahme durch das Probenentnahmeventil während des laufenden Betriebs der Behälterbehandlungsanlage erfolgen. Unterbrechungszeiten im Anlagenbetrieb für die Probenentnahme können somit verhindert werden. Das Probenentnahmeventil kann zudem eine schnelle und zuverlässige Probenentnahme ermöglichen.

In einem Ausführungsbeispiel weist der Probenentnahmeraum eine Außenwand auf. Das Probenentnahmeventil ist in oder an der Außenwand angeordnet, wobei das Probenentnahmeventil vorzugsweise ein Durchgangsloch in der Außenwand verschließt (z. B. von außerhalb des Probenentnahmeraums). Damit kann das Probenentnahmeventil auf einfache Weise montiert und angeordnet werden. Das Probenentnahmeventil kann vorzugsweise als ein Zapfventil zum Entnehmen von Proben aus dem Probenentnahmeraum ausgebildet und angeordnet sein.

Vorzugsweise kann das Probenentnahmeventil einfach an einen Flanschbereich der Außenwand, der das Durchgangsloch umgibt, angeflanscht sein.

In einem weiteren Ausführungsbeispiel ist das Probenentnahmeventil außerhalb von dem Probenentnahmeraum angeordnet. Vorteilhaft kann diese Anordnung dafür sorgen, dass das Probenentnahmeventil den Bedingungen im Probenentnahmeraum nicht ausgesetzt ist, die bspw. eine Verringerung der Standzeit des Probenentnahmeventils zur Folge haben könnten.

In einem weiteren Ausführungsbeispiel weist die Behälterbehandlungsanlage eine Reinigungsfluidquelle, vorzugsweise Sterilisationsfluidquelle oder Heißdampfquelle, auf, wobei die Reinigungsfluidquelle mit einem weiteren Gaseinlass des Probenentnahmeventils verbunden oder verbindbar ist, vorzugsweise unter Zwischenschaltung eines (z. B. manuell betätigbaren) Reinigungsventils.

Vorteilhaft kann somit eine Reinigung des Probenentnahmeventils vor der Probenentnahme durchgeführt werden, sodass die Probe nicht durch Keime usw. an dem Probenentnahmeventil verunreinigt wird.

In einem weiteren Ausführungsbeispiel verbindet das Probenentnahmeventil in einer ersten Ventilstellung den Gaseinlass des Probenentnahmeventils mit dem Gasauslass des Probenentnahmeventils. Vorzugsweise kann der weitere Gaseinlass blockiert oder freigegeben sein.

In einem weiteren Ausführungsbeispiel verbindet das Probenentnahmeventil in einer zweiten Ventilstellung den weiteren Gaseinlass des Probenentnahmeventils mit dem Gasauslass des Probenentnahmeventils und/oder blockiert den Gaseinlass des Probenentnahmeventils.

In einem weiteren Ausführungsbeispiel weist die Behälterbehandlungsanlage ferner einen, vorzugsweise tragbaren, Probenbehälter, der einen Gaseinlass, der mit dem Gasauslass des Probenentnahmeventils verbunden oder verbindbar ist (z. B. vorzugsweise mittels einer schnellkuppelbaren (z. B. werkzeuglos kuppelbaren) Fluidleitung), und eine Flüssigkeitskammer zum Füllen mit einer Flüssigkeit aufweist. Vorteilhaft ermöglicht der Probenbehälter, dass die entnommene Probe transportierbar wird, nämlich durch Abscheiden in eine Flüssigkeit im Probenbehälter. Alle Partikel oder Mikroorganismen können in die Flüssigkeit überführt werden. Anschließend kann die Qualität oder Zusammensetzung der Flüssigkeit in einem Labor bspw. mikrobiologisch untersucht werden.

Es versteht sich, dass der hierin offenbarte Probenbehälter auch unabhängig von der Behälterbehandlungsanlage offenbart ist.

In einer Ausführungsform weist der Probenbehälter ein Reinigungsventil auf. Vorzugsweise kann das Reinigungsventil in einer ersten Ventilstellung den Gaseinlass des Probenbehälters mit einem Reinigungsauslass des Probenbehälters verbinden, vorzugsweise unter Umgehung der Flüssigkeitskammer, und/oder in einer zweiten Ventilstellung eine Verbindung von dem Gaseinlass des Probenbehälters zu dem Reinigungsauslass des Probenbehälters blockieren. Vorteilhaft kann damit ermöglicht, werden, dass auch der Probenbehälter im an das Probeentnahmeventil angeschlossen Zustand zumindest teilweise gereinigt werden kann, vorzugsweise im gleichen Schritt wie die Reinigung des Probenentnahmeventils durch das Reinigungsfluid von der Reinigungsfluidquelle. Bevorzugt kann das Reinigungsfluid zunächst das Probenentnahmeventil durchströmen und anschließend einen Abschnitt des Probenbehälters durchströmen.

In einer weiteren Ausführungsform weist der Probenbehälter ein Füllventil auf. Vorzugsweise kann das Füllventil in einer ersten Ventilstellung den Gaseinlass des Probenbehälters mit einem in die Flüssigkeitskammer ragenden Füllrohr (z. B. Tauchrohr) verbinden und/oder in einer zweiten Ventilstellung eine Verbindung von dem Gaseinlass des Probenbehälters zu dem Füllrohr blockieren. Vorteilhaft kann mit dem Füllventil sichergestellt werden, dass im Wesentlichen nur die entnommene Probe in die Flüssigkeitskammer gelangt. Das Füllrohr kann vorteilhaft dafür sorgen, dass die entnommene Gasprobe in der Flüssigkeit beim Aufsteigen zu der Flüssigkeitsoberfläche ausgewaschen wird.

Vorzugweise kann der Probenbehälter eine Fluidkammer stromabwärts des Gaseinlasses aufweisen. Ein erster Auslass der Fluidkammer, der zu dem Füllrohr führt, kann von einem Ventilglied des Füllventils freigegeben und blockiert werden. Ein zweiter Auslass der Fluidkammer, der zu dem Reinigungsauslass führt, kann von einem Ventilglied des Reinigungsventils freigegeben und blockiert werden.

In einer weiteren Ausführungsform weist der Probenbehälter ein Sicherheitsventil auf. Vorzugsweise kann das Sicherheitsventil dazu ausgebildet sein, bei Überschreiten und/oder Unterschreiten eines vorbestimmten Gasdruckwerts, vorzugsweise in einem Gasvolumen oberhalb der Flüssigkeitskammer, zum Ablassen von Gas und/oder zum Einlassen von Gas selbsttätig zu öffnen. Vorzugsweise kann damit bspw. ein Bersten oder Implodieren des Probenbehälters bei unsachgemäßer Benutzung (z. B. Filter verstopft oder Füllventil während Probenentnahme geschlossen) verhindert werden.

In einer weiteren Ausführungsform weist der Probenbehälter einen Gasauslass auf, der mit der Flüssigkeitskammer vorzugsweise unter Zwischenschaltung eines Gasfilters, vorzugsweise Sterilluftfilters, und/oder eines Ventils verbunden ist. Vorteilhaft kann mit dem Ventil (z. B. Rückschlagventil) oder Gasfilter vor, während und/oder nach der Probenentnahme sichergestellt werden, dass keine weitere Luft in den Probenbehälter eindringt und die Flüssigkeit verunreinigt.

In einer weiteren Ausführungsform weist die Behälterbehandlungsanlage ferner eine Vakuumquelle, vorzugsweise Vakuumpumpe, auf. Vorzugsweise kann die Vakuumquelle zum Ansaugen von Gas mit dem Gasauslass des Probenbehälters verbunden oder verbindbar sein. Mittels der Vakuumpumpe kann die Probenentnahme aus dem Probenentnahmeraum unterstützt oder ermöglicht werden. Eine Anordnung der Vakuumquelle stromabwärts des Proebenbehälters kann zudem eine Verunreinigung der Proben durch die Vakuumquelle verhindern.

In einer Ausführungsvariante weist die mindestens eine Behälterbehandlungsvorrichtung eine Heizeinrichtung zum Erwärmen von Vorformligen für die Behälter, eine Behälterherstellvorrichtung, vorzugsweise eine Behälterblasvorrichtung (z. B. Steckblasvorrichtung), zum Herstellen der Behälter, eine Sterilisierungsvorrichtung z.B. zum Sterilisieren von Vorformlingen für die Behälter, eine Füllvorrichtung, vorzugsweise ein Füllerkarussell, zum Füllen der Behälter und/oder eine Verschließvorrichtung, vorzugsweise ein Verschließerkarussell, zum Verschließen der Behälter auf.

In einer weiteren Ausführungsvariante ist der Probenentnahmeraumein Reinraum, ein Sterilraum oder ein Aseptikraum.

Vorzugsweise kann ein Reinraum im Wesentlichen frei bzw. arm an Partikeln (z. B. Teilchen aller Art und Größe) sein. Bevorzugt kann ein Sterilraum im Wesentlichen frei von Mikroorganismen sein. Es ist möglich, dass eine Anzahl von Teilchen proportional zu einer Anzahl von Mikroorganismen ist, sodass ein Reinraum auch ein Sterilraum sein kann und umgekehrt.

In einer weiteren Ausführungsvariante ist der Probenentnahmeraum mit einem Überdruck beaufschlagt. Beispielsweise kann ein Inneres des Probenentnahmeraums im Betrieb einen höheren Druck aufweisen, als der Druck, der stromauf, stromab und/oder außerhalb des Probenentnahmeraums herrscht. Bevorzugt können so keine stromauf, stromab oder außerhalb zirkulierenden Kontaminationen und/oder Keime in den Probenentnahmeraum eindringen.

In einer weiteren Ausführungsvariante ist der Probenentnahmeraum gekapselt.

Ein weiterer Aspekt betrifft ein Verfahren zum Überwachen einer Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel), vorzugsweise wie hierin offenbart. Das Verfahren weist ein Entnehmen einer Gasprobe (z. B. Luftprobe) aus einem Probenentnahmeraum, in dem mindestens eine Behälterbehandlungsvorrichtung und/oder mindestens ein Behälterförderer (z. B. Transportstern und/oder Linearförderer) angeordnet ist, mittels eines Probenentnahmeventils, das einen Gaseinlass, der mit einem Inneren des Probenentnahmeraums (z. B. direkt angrenzend) verbunden ist, und einen Gasauslass zum Entnehmen der Gasprobe aufweist, auf. Das Verfahren kann die gleichen Vorteile erzielen, die bereits für die Behälterbehandlungsanlage beschrieben wurden.

In einem Ausführungsbeispiel weist das Verfahren ferner ein Reinigen, vorzugsweise Sterilisieren, des Probeentnahmeventils vor dem Entnehmen mit einem Reinigungsfluid, vorzugsweise Heißdampf, auf.

Bevorzugt kann das Reinigungsfluid direkt in einen Reinigungseinlass bzw. weiteren Gaseinlass des Probenentnahmeventils geleitet werden, vorzugsweise wenn das Probenentnahmeventil in einer Schließstellung ist.

Vorzugsweise kann das Reinigungsfluid durch das Probenentnahmeventil und stromabwärts des Probenentnahmeventils in einen Abschnitt (z. B. aufweisend ein Füllventil) des Probenbehälters zum Reinigen des Abschnitts und einer Verbindungsleitung zwischen dem Probenentnahmeventil und dem Probenbehälter geleitet werden.

In einem weiteren Ausführungsbeispiel weist das Verfahren ein Leiten der entnommenen Gasprobe in eine Flüssigkeit, vorzugsweise Sterilwasser, eines, bevorzugt tragbaren, Probenbehälters, vorzugsweise mittels Ansaugen durch eine Vakuumquelle, auf. Vorzugsweise kann das Verfahren ferner ein Untersuchen der Flüssigkeit, in die das entnommene Gas geleitet wurde, auf Keime und/oder Verunreinigungen aufweisen, z. B. in einem Labor.

Bevorzugt kann das Verfahren ein Sterilisieren des Probenbehälters vor dem Leiten der entnommenen Gasprobe in die Flüssigkeit aufweisen, vorzugsweise in einem Autoklav.

Vorzugsweise kann das Verfahren ein Herstellen, vorzugsweise Blasen, von Behältern aus Vorformlingen aufweisen, z. B. mittels einer Blasvorrichtung (z. B. Streckblasvorrichtung) der Behälterbehandlungsanlage.

Vorzugsweise kann das Verfahren ein Befüllen der Behälter mit einem Getränk oder flüssigem oder pastösem Nahrungsmittel aufweisen, z. B. mittels einer Füllvorrichtung (z. B. Füllerkarussell) der Behälterbehandlungsanlage.

Vorzugsweise kann das Verfahren ein Verschließen der Behälter aufweisen, z. B. mittels einer Verschließvorrichtung (z. B. Verschließerkarussell) der Behälterbehandlungsanlage.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung einer Behälterbehandlungsanlage gemäß einem Ausführungsbeispiel der vorliegenden Offenbarung;
- Figur 2: eine Schnittansicht durch ein Probenentnahmeventil;
- Figur 3: eine Schnittansicht durch einen Probenbehälter;
- Figur 4: eine schematische Darstellung einer Verbindung von Probeentnahmeventil und Probenbehälter;
- Figur 5: die Verbindung von Figur 4 in einem Reinigungsmodus; und
- Figur 6: die Verbindung von Figur 4 in einem Probenentnahmemodus.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

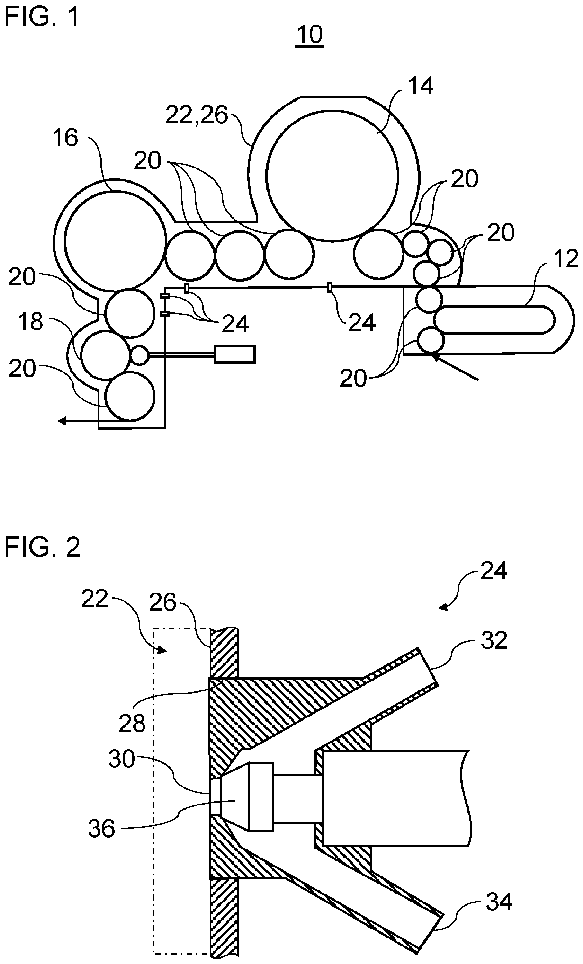

Die Figur 1 zeigt eine Behälterbehandlungsanlage 10 zum Behandeln von Behältern. Beispielsweise kann die Behälterbehandlungsanlage 10 die Behälter herstellen, reinigen, prüfen, abfüllen, verschließen, etikettieren, bedrucken, gruppieren und/oder verpacken. Die Behälter können beispielsweise als Flaschen, Dosen, Kanister, Kartons, Flakons usw. ausgeführt sein. Die Behälter werden bevorzugt zum Aufnehmen von flüssigen oder pastösen Medien verwendet. Vorzugsweise werden die Behälter zum Aufnehmen von Getränken bzw. Nahrungsmitteln verwendet.

Die Behälterbehandlungsanlage 10 weist mindestens eine Behälterbehandlungsvorrichtung 12, 14, 16, 18 und/oder mindestens einen Behälterförderer 20 auf. Die Behälterbehandlungsanlage 10 weist ferner einen Probenentnahmeraum 22 und mindestens ein Probenentnahmeventil 24 auf.

Die als Heizeinrichtung ausgeführte Behälterbehandlungsvorrichtung 12 kann Vorformlinge (Behälterrohling bzw. Preforms) auf eine gewünschte Temperatur erhitzen.

Die als Behälterherstellvorrichtung ausgeführte Behälterbehandlungsvorrichtung 14 kann aus Vorformlingen Behälter herstellen. Beispielsweise kann die Behälterherstellvorrichtung als eine Behälterblasvorrichtung, vorzugsweise Streckblasvorrichtung, zum Blasen der Behälter aus den Vorformlingen ausgeführt sein. Bevorzugt ist die Behälterherstellvorrichtung als Behälterherstell-Karussell ausgeführt. Die Behälterherstellvorrichtung kann mehrere Herstellstationen, z. B. Blasstationen, zum gleichzeitigen Herstellen mehrerer Behälter aufweisen. Bspw. können die Herstellstationen um einen Umfang der als Behälterherstell-Karussell ausgeführten Behälterherstellvorrichtung angeordnet sein. Die Behälterherstellvorrichtung kann bezüglich eines Behälterstroms stromabwärts von der Heizeinrichtung angeordnet sein.

Die als Füllvorrichtung ausgeführte Behälterbehandlungsvorrichtung 16 kann die Behälter füllen, vorzugsweise mit einem flüssigen oder pastösen Medium. Die Füllvorrichtung ist vorzugsweise als ein Füllerkarussell ausgeführt. Die Füllvorrichtung kann mehrere Füllventile zum gleichzeitigen Befüllen mehrerer Behälter aufweisen. Bspw. können die Füllventile um einen Umfang der als Füllerkarussell ausgeführten Füllvorrichtung angeordnet sein. Die Füllvorrichtung kann bezüglich eines Behälterstroms stromabwärts von der Behälterherstellvorrichtung angeordnet sein.

Die als Verschließvorrichtung ausgeführte Behälterbehandlungsvorrichtung 18 kann die Behälter verschließen, z. B. mit einem Deckel, einem Korken, einem Kronkorken oder einem Schraubverschluss. Die Verschließvorrichtung kann vorzugsweise als ein Verschließerkarussell ausgeführt sein. Die Verschließvorrichtung kann mehrere Verschließstationen zum gleichzeitigen Verschließen mehrerer Behälter aufweisen. Bspw. können die Verschließstationen um einen Umfang der als Verschließerkarussell ausgeführten Verschließvorrichtung angeordnet sein. Die Verschließvorrichtung kann bezüglich eines Behälterstroms stromabwärts von der Füllvorrichtung angeordnet sein.

Der mindestens eine Behälterförderer 20 kann die Behälter durch die Behälterbehandlungsanlage transportieren. Der mindestens eine Behälterförderer 20 kann die Behälterbehandlungsvorrichtungen 12, 14, 16 und/oder 18 miteinander verbinden. Der mindestens eine Behälterförderer 20 kann bspw. mindestens einen Transportstern und/oder mindestens einen Linearförderer aufweisen.

Im in Figur 1 dargestellten Ausführungsbeispiel sind die Behälterbehandlungsvorrichtungen 14, 16 und 18 sowie eine Vielzahl von Behälterförderern 20 im Probenentnahmeraum 22 angeordnet. Es ist möglich, dass alternative und/oder zusätzliche Behälterbehandlungsvorrichtungen in dem Probenentnahmeraum 22 angeordnet sind. Bspw. kann die als Heizeinrichtung ausgeführte Behälterbehandlungsvorrichtungen 12 zusätzlich in dem Probenentnahmeraum 22 angeordnet sein. Es ist auch möglich, dass bspw. ein Sterilisator zwischen den Behälterbehandlungsvorrichtungen 12 und 14 zum Sterilisieren der Vorformlinge vor dem Herstellen der Behälter angeordnet ist.

Bevorzugt ist der Probenentnahmeraum 22 ein Reinraum bzw. Isolator, ein Sterilraum oder ein Aseptikraum. Der Probenentnahmeraume 22 kann mit einem Überdruck beaufschlagt sein. Vorzugsweise ist der Probenentnahmeraum 22 gekapselt.

Das mindestens eine Probenentnahmeventil 24 kann in oder an einer Außenwand 26 des Probenentnahmeraums 22 angeordnet sein. Beispielsweise kann ein Probenentnahmeventil 24 an einer Außenwand 26 im Bereich der als Behälterherstellvorrichtung ausgeführten Behälterbehandlungsvorrichtung 14 angeordnet sein. Alternativ oder zusätzlich kann ein oder mehrere Probenentnahmeventile 24 an einer Außenwand 26 im Bereich der als Füllvorrichtung ausgeführten Behälterbehandlungsvorrichtung 16 angeordnet sein. Alternativ oder zusätzlich kann ein Probenentnahmeventile 24 an einer Außenwand im Bereich der als Verschließvorrichtung ausgeführten Behälterbehandlungsvorrichtung 18 angeordnet sein.

Das mindestens eine Probenentnahmeventils 24 kann dazu ausgebildet sein, Proben (Gasproben, Luftproben) aus dem Probenentnahmeraum 22 zu entnehmen, ohne dass der Probenentnahmeraum 22 verunreinigt wird. Bei bestimmungsgemäßem Gebrauch kann durch das Probenentnahmeventil 24 kein Gas von außen in den Probenentnahmeraum 22 eindringen. Die Probenentnahme kann bspw. im laufenden Betrieb der Behälterbehandlungsanlage 10 durchgeführt werden.

Die Figur 2 zeigt ein beispielhaftes Probenentnahmeventil 24.

Das Probenentnahmeventil 24 ist bevorzugt von außerhalb des Probenentnahmeraume 22 zugängig. Das Probenentnahmeventil 24 kann in bzw. an einer Außenwand 26 des Probenentnahmeraums 22 angeordnet sein. Beispielsweise kann die Außenwand 26 ein Durchgangsloch 28 aufweisen. In bzw. an dem Durchgangsloch 28 kann das Probenentnahmeventil 24 angeordnet sein. Das Probenentnahmeventil 24 kann das Durchgangsloch 28 verschließen bzw. abdecken. Das Probenentnahmeventil 24 ist bevorzugt manuell betätigt.

Das Probenentnahmeventil 24 weist einen Gaseinlass 30 und einen Gasauslass 32 auf. Das Probenentnahmeventil 24 kann einen weiteren Gaseinlass 34 und ein bewegbares Ventilglied 36 aufweisen.

Der Gaseinlass 30 kann an ein Inneres des Probenentnahmeraums 22 angrenzen. Aus dem Gasauslass 32 kann Gas abgeführt werden, z. B. Gas aus dem Probenentnahmeraum 22, wenn das Probenentnahmeventil 24 geöffnet ist.

Der weitere Gaseinlass 34 kann bspw. zum Anschließen einer Reinigungsfluidquelle (nicht in Figur 2 dargestellt) genutzt werden. Die Reinigungsfluidquelle kann ein Reinigungsfluid zu dem Probenentnahmeventil 24 zum Reinigen des Probenentnahmeventils 24 und ggf. von Komponenten stromabwärts von dem Gasauslass 32 zuführen.

In einer ersten Ventilstellung bzw. Öffnungsstellung des Probenentnahmeventil 24 kann der Gaseinlass 30 und der Gasauslass 32 miteinander verbunden sein. Das Ventilglied 36 gibt den Gaseinlass 30 frei. Gas kann aus dem Inneren des Probenentnahmeraums 22 durch den Gaseinlass 30 zu dem Gasauslass 32 strömen. Im dargestellten Ausführungsbeispiel sind der weitere Gaseinlass 34 und der Gasauslass 32 ebenfalls in der ersten Ventilstellung verbunden. In anderen Ausführungsbeispielen ist es möglich, dass der weitere Gaseinlass 34 in der ersten Ventilstellung blockiert ist (z. B durch ein Ventilglied des Probenentnahmeventils).

In einer zweiten Ventilstellung bzw. Schließstellung des Probenentnahmeventil 24 können der Gaseinlass 30 blockiert und der weitere Gaseinlass 34 und der Gasauslass 32 miteinander verbunden sein. Das Ventilglied 36 blockiert den Gaseinlass 30. Fluid (z. B. Reinigungsfluid) von dem weiteren Gaseinlass 34 kann das Ventilglied 36 umströmen und zu dem Gasauslass 32 strömen.

Beispielweise kann das Probenentnahmeventil 24 eine Fluidkammer aufweisen, die den Gaseinlass 30 aufweist und in dem das Ventilglied 36 bewegbar ist. An die Fluidkammer kann ein erster Kanal angeschlossen sein, an dessen Ende der Gasauslass 32 angeordnet ist. An die Fluidkammer kann ein zweiter Kanal anschlossen sein, an dessen Ende der weitere Gaseinlass 34 angeordnet ist. Der erste Kanal und der zweite Kanal können sich relativ zueinander bspw. V-förmig hin zu der Fluidkammer erstrecken. Der erste Kanal und der zweite Kanal können vorzugsweise an einander gegenüberliegenden Seiten der Fluidkammer angeordnet sein.

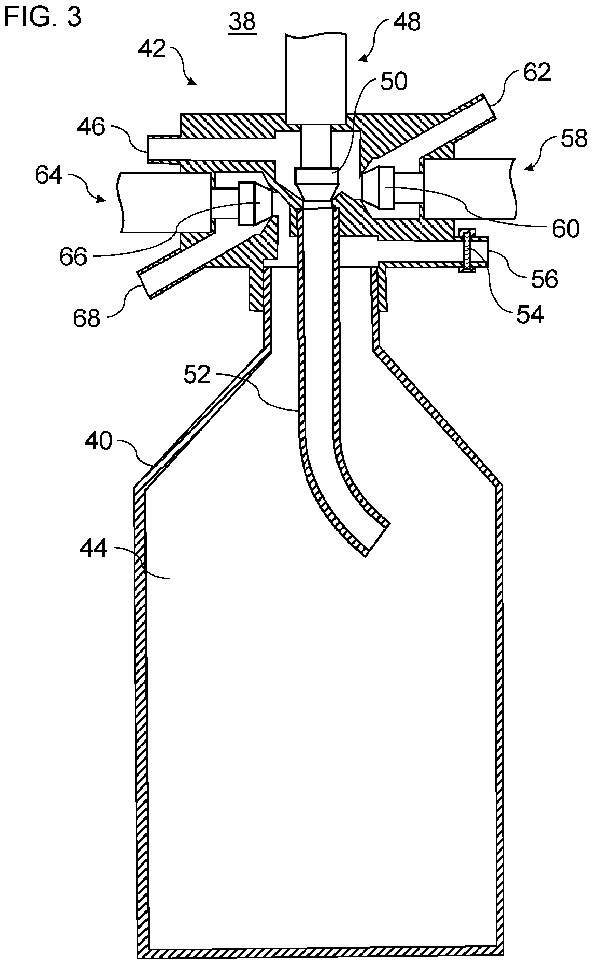

Die Figur 3 zeigt einen Probenbehälter 38.

Der Probenbehälter 38 kann an das Probenentnahmeventil 24 zum Entnehmen einer Gasprobe aus dem Probenentnahmeraum 22 angeschlossen werden.

Beispielsweise kann der Probenbehälter 38 einen Behälterkörper 40 und eine Ventileinrichtung 42 aufweisen. Der Probenbehälter 38 ist bevorzugt tragbar, z. B. mit einem Traggriff, der am Behälterkörper 40 oder an der Ventileinrichtung 42 angeordnet ist.

Der Behälterkörper 40 weist eine Flüssigkeitskammer 44 auf. Die Flüssigkeitskammer 44 kann mit einer Flüssigkeit, z. B. Sterilwasser, gefüllt sein. Die Flüssigkeitskammer 44 kann bspw. ein Volumen ≤ 10 l, ≤ 5 l, ≤ 3l oder ≤ 2l aufweisen. Der Behälterkörper 40 kann eine Markierung aufweisen, mit der ein gewünschter Flüssigkeitsfüllstand in der Flüssigkeitskammer 44 angegeben werden kann. Der Behälterkörper 40 ist vorzugsweise durchsichtig.

Die Ventileinrichtung 42 kann oberhalb von dem Behälterkörper 40 angeordnet sein. Die Ventileinrichtung 42 kann auf einer Öffnung des Behälterkörpers 40 angeordnet sein, z. B. an einem Behälterhals des Behälterkörpers 40. Die Ventileinrichtung 42 und der Behälterkörper 40 können lösbar miteinander verbunden sein, z. B. mittels Einschrauben des Behälterkörpers 40, vorzugsweise des Behälterhalses des Behälterkörpers 40, in die Ventileinrichtung 42.

Beispielsweise kann die Ventileinrichtung 42 einen Gaseinlass 46, ein Füllventil 48 mit einem bewegbaren Ventilglied 50, ein Füllrohr 52, einen Gasfilter 54 und einen Gasauslass 56 aufweisen.

Durch den Gaseinlass 46 kann Gas in die Ventileinrichtung 42 einströmen.

Das Füllventil 48 ist bevorzugt manuell betätigt. Das Füllventil 48 kann eine Verbindung zwischen dem Gaseinlass 46 und dem Füllrohr 52 freigeben oder trennen.

In einer ersten Ventilstellung bzw. Öffnungsstellung kann das Füllventil 48 den Gaseinlass 46 und das Füllrohr 52 miteinander verbinden. Beispielsweise kann das Ventilglied 50 einen Einlass des Füllrohrs 52 bzw. einen Auslass einer Fluidkammer, in der das Ventilglied 50 positioniert ist, zu dem Füllrohr 52 zum Durchströmen zu dem Füllrohr 52 freigeben.

In einer zweiten Ventilstellung bzw. Schließstellung kann das Füllventil 48 den Gaseinlass 46 und das Füllrohr 52 voneinander trennen. Beispielsweise kann das Ventilglied 50 einen Einlass des Füllrohrs 52 bzw. einen Auslass einer Fluidkammer, in der das Ventilglied 50 positioniert ist, zu dem Füllrohr 52 blockieren.

Das Füllrohr 52 kann in die Flüssigkeitskammer 44 des Behälterkörpers 40 ragen. Im Probenentnahmebetrieb kann ein Auslass des Füllrohrs 52 unterhalb von einem Flüssigkeitsspiegel einer Flüssigkeit in der Flüssigkeitskammer 44 positioniert sein. Bevorzugt kann der Auslass des Füllrohrs 52 unterhalb von einer Markierung des Behälterkörpers 40, die eine gewünschten Flüssigkeitsfüllstand in der Flüssigkeitskammer 44 angibt, angeordnet sein.

Der Gasauslass 56 kann mit dem Behälterkörper 40 verbunden sein. In der Verbindung kann der Gasfilter 54, vorzugsweise ein Sterilluftfilter, angeordnet sein. Beispielsweise kann Gas aus dem Behälterkörper 40 über einen das Füllrohr 52 umgebenden Ringraum in einem Behälterhals des Behälterkörpers 40 zu dem Gasauslass 56 strömen. Alternativ oder zusätzlich zu dem Gasfilter 54 kann bspw. ein Ventil vorgesehen sein, das den Gasauslass 56 in einer ersten Ventilstellung bzw. Öffnungsstellung freigibt und in einer zweiten Ventilstellung bzw. Schließstellung blockiert.

Bevorzugt ist das Füllventil 48 zum Trennen der Verbindung zwischen dem Gaseinlass 56 und dem Füllrohr 52 bzw. zu der Schließstellung hin vorgespannt.

Vorzugsweise kann ein Strömungsweg von dem Gaseinlass 46 zu dem Gasauslass 56 die folgenden Komponenten in der genannten Reihenfolge aufweisen: Gaseinlass 46 - Füllventil 48 - Füllrohr 52 - Flüssigkeitskammer 44 - Gasfilter 56 und/oder Ventil - Gasauslass 56.

Optional kann die Ventileinrichtung 42 ein Reinigungsventil 58 mit bewegbarem Ventilglied 60 und einen Reinigungsauslass bzw. weiteren Gasauslass 62 aufweisen.

Das Reinigungsventil 58 ist bevorzugt manuell betätigt. Das Reinigungsventil 58 kann eine Verbindung zwischen einer Fluidkammer, in der das Ventilglied 50 des Füllventils 48 positioniert ist, und dem weiteren Gasauslass 62 freigeben oder trennen.

In einer ersten Ventilstellung bzw. Öffnungsstellung kann das Reinigungsventil 58 die Fluidkammer, in der das Ventilglied 50 des Füllventils 48 positioniert ist, und den weiteren Gasauslass 62 miteinander verbinden. Beispielsweise kann das Ventilglied 60 einen Einlass einer Fluidkammer, in der das Ventilglied 60 positioniert ist, bzw. einen (weiteren) Auslass der Ventilkammer, in der das Ventilglied 50 des Füllventils 48 positioniert ist, zu dem Gasauslass 62 zum Durchströmen zu dem weiteren Gasauslass 62 freigeben.

In einer zweiten Ventilstellung bzw. Schließstellung kann das Reinigungsventil 58 die Fluidkammer, in der das Ventilglied 50 positioniert ist, und den weiteren Gasauslass 62 voneinander trennen. Beispielsweise kann das Ventilglied 60 einen Einlass einer Fluidkammer, in der das Ventilglied 60 positioniert ist, bzw. einen (weiteren) Auslass der Ventilkammer, in der das Ventilglied 50 des Füllventils 48 positioniert ist, zu dem Gasauslass 62 blockieren.

Bevorzugt ist das Reinigungsventil 58 zum Trennen der Verbindung zwischen einer Fluidkammer, in der das Ventilglied 50 des Füllventils 48 positioniert ist, und dem weiteren Gasauslass 62 bzw. zu der Schließstellung hin vorgespannt.

Vorzugsweise kann ein Strömungsweg von dem Gaseinlass 46 zu dem Gasauslass 62 die folgenden Komponenten in der genannten Reihenfolge aufweisen: Gaseinlass 46 - Füllventil 48 - Reinigungsventil 58 - Gasauslass 62.

Optional kann die Ventileinrichtung 42 ein Sicherheitsventil 64 mit bewegbarem Ventilglied 66 und einen Sicherheitsauslass bzw. weiteren Gasauslass 68 aufweisen.

Das Sicherheitsventil 64 ist bevorzugt dazu ausgebildet, bei Überschreiten eines vorbestimmten Drucks stromaufwärts des Sicherheitsventils 64 selbsttätig zu öffnen, um Gas in eine Umgebung des Probenbehälters 38 abzulassen. Das Sicherheitsventil 64 kann eine Verbindung zwischen dem Behälterkörper 40 und dem weiteren Gasauslass 68 freigeben oder trennen (= Überdruck-Sicherheitsventil). Es ist alternativ möglich, dass das Sicherheitsventil 64 öffnet, wenn ein Gasdruck stromaufwärts des Sicherheitsventils 64 einen vorbestimmten Gasdruckwert unterschreitet, z. B. wenn ein Unterdruck in der Flüssigkeitskammer 44 aufgrund einer an den Probenbehälter 38 angeschlossenen Vakuumpumpe zu klein wird, und bspw. ein Implodieren des Behälterkörpers 40 droht (= Unterdruck-Sicherheitsventil). In einer weiteren Alternative kann die Ventileinrichtung 42 eine Sicherheitsventilvorrichtung mit einem Überdruck-Sicherheitsventil und einem Unterdruck-Sicherheitsventil aufweisen.

In einer ersten Ventilstellung bzw. Öffnungsstellung kann das Sicherheitsventil 64 den Behälterkörper 40 mit dessen Flüssigkeitskammer 44 und den weiteren Gasauslass 68 miteinander verbinden. Beispielsweise kann das Ventilglied 66 einen Einlass einer Fluidkammer, in der das Ventilglied 66 positioniert ist, zum Durchströmen zu dem weiteren Gasauslass 68 freigeben.

In einer zweiten Ventilstellung bzw. Schließstellung kann das Sicherheitsventil 64 den Behälterkörper 40 mit dessen Flüssigkeitskammer 44 und den weiteren Gasauslass 68 voneinander trennen. Beispielsweise kann das Ventilglied 66 einen Einlass einer Fluidkammer, in der das Ventilglied 66 positioniert ist, oder einen Auslass einer Ventilkammer, in der das Ventilglied 66 positioniert ist, zu dem weiteren Gasauslass 68 blockieren.

Bevorzugt ist das Sicherheitsventil 64 zum Trennen der Verbindung zwischen dem Behälterkörper 40 und dem weiteren Gasauslass 68 bzw. zu der Schließstellung hin vorgespannt.

Vorzugsweise kann ein Strömungsweg von dem Gaseinlass 46 zu dem Gasauslass 68 die folgenden Komponenten in der genannten Reihenfolge aufweisen: Gaseinlass 46 - Füllventil 48 - Füllrohr 52 - Sicherheitsventil 64 - Gasauslass 68.

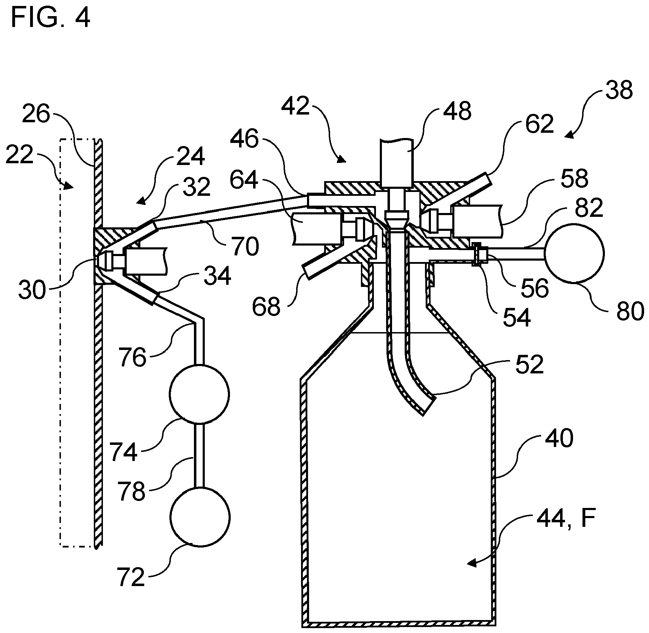

Die Figur 4 zeigt, wie der Probenbehälter 38 an dem Probenentnahmeventil 24 angeschlossen werden kann.

Eine Verbindungsleitung 70 kann den Gasauslass 32 des Probenentnahmeventils 24 mit dem Gaseinlass 46 des Probenbehälters 38 verbinden. Die Verbindungsleitung 70 kann bspw. flexibel bzw. biegsam sein. Die Verbindungsleitung 70 kann werkzeuglos und/oder mittels einer Schnellkupplung an dem Gasauslass 32 des Probenentnahmeventils 24 und/oder Gaseinlass 46 des Probenbehälters 38 angeschlossen sein.

Es ist möglich, dass eine Reinigungsfluidquelle 72 (nur schematisch in Figur 4 dargestellt) mit dem Gaseinlass 34 des Probenentnahmeventils 24 verbunden ist. Die Reinigungsfluidquelle 72 kann ein Reinigungsfluid zum Reinigen, vorzugsweise Sterilisieren, bereitstellen. Beispielsweise kann die Reinigungsfluidquelle 72 eine Heißdampfquelle sein. Beispielsweise kann die Reinigungsfluidquelle 72 von einem Sterilisator der Behälterbehandlungsanlage 10 gespeist werden.

Optional kann ein (weiteres) Reinigungsventil 74 (nur schematisch in Figur 4 dargestellt) in einer Verbindung zwischen der Reinigungsfluidquelle 72 und dem Gaseinlass 34 angeordnet sein. Das Reinigungsventil 74 kann in einer Schließstellung die Verbindung zwischen der Reinigungsfluidquelle 72 und dem Gaseinlass 34 trennen bzw. blockieren. Das Reinigungsventil 74 kann in einer Öffnungsstellung die Verbindung zwischen der Reinigungsfluidquelle 72 und dem Gaseinlass 34 freigeben. Bevorzugt ist das Reinigungsventil 74 manuell betätigbar. Vorzugsweise kann das Reinigungsventil 74 als ein Heißdampfventil ausgeführt sein.

Eine Verbindungsleitung 76 kann das Reinigungsventil 74 mit dem Gaseinlass 34 verbinden. Die Verbindungsleitung 76 kann bspw. flexibel bzw. biegsam sein. Die Verbindungsleitung 76 kann werkzeuglos und/oder mittels einer Schnellkupplung an dem Gaseinlass 34 des Probenentnahmeventils 24 und/oder dem Reinigungsventil 74 angeschlossen sein.

Eine Verbindungsleitung 78 kann die Reinigungsfluidquelle 72 mit dem Reinigungsventil 74 verbinden. Die Verbindungsleitung 78 kann bspw. flexibel bzw. biegsam sein. Die Verbindungsleitung 78 kann werkzeuglos und/oder mittels einer Schnellkupplung an dem Reinigungsventil 74 und/oder der Reinigungsfluidquelle 72 angeschlossen sein.

Es ist möglich, dass eine Vakuumquelle 80 (nur schematisch in Figur 4 dargestellt) mit dem Gasauslass 56 des Probenbehälters 38 verbunden ist. Die Vakuumquelle 80 kann Gas bzw. Luft von dem Gasauslass 56 und somit aus dem Behälterkörper 40 absaugen. Beispielsweise kann die Vakuumquelle 80 als eine Vakuumpumpe ausgeführt sein.

Eine Verbindungsleitung 82 kann den Gasauslass 56 des Probenbehälters 38 mit der Vakuumquelle 80 verbinden. Die Verbindungsleitung 82 kann bspw. flexibel bzw. biegsam sein. Die Verbindungsleitung 82 kann werkzeuglos und/oder mittels einer Schnellkupplung an den Gasauslass 56 des Probenbehälters 38 und/oder der Vakuumquelle 80 angeschlossen sein.

Nachfolgend ist ein beispielhaftes Verfahren zum Überwachen der Behälterbehandlungsanlage 10 unter Bezugnahme auf die Figuren 1 bis 6 beschrieben.

Zunächst kann der Probenbehälter 38 gereinigt, vorzugsweise sterilisiert, werden. Die optionale Reinigung kann bspw. durchgeführt werden, wenn die Hygieneanforderungen an die Behälterbehandlungsanlage 10 sehr hoch sind, z. B. bei einer Ausführung des Probenentnahmeraums 22 als Reinraum, Sterilraum oder Aseptikraum.

Beispielsweise kann der Probenbehälter 38 in einem Autoklav sterilisiert werden. Beim Reinigen sind vorzugsweise die Ventile 48 und 58 in einer Öffnungsstellung. Der Gaseinlass 46, der Gasauslass 56 und der Gasauslass 62 sind vorzugsweise frei. Der Probenbehälter 38 kann bereits mit einer Flüssigkeit, vorzugsweise Sterilwasser, gefüllt sein. Nach dem Reinigen können die Ventile 48 und 58 geschlossen werden.

Der Probenbehälter 38 kann nach der optionalen Reinigung an das Probenentnahmeventil 24 angeschlossen werden. Vorzugsweise kann die Verbindungsleitung 70 an dem Gaseinlass 46 des Probenbehälters 38 und/oder an dem Gasauslass 32 des Probenentnahmeventils 24 angeschlossen werden. Das Probenentnahmeventil 24 ist bevorzugt in einer Schließstellung.

Zusätzlich kann die Vakuumquelle 80 an den Probenbehälter 38 angeschlossen werden. Vorzugsweise kann die Verbindungsleitung 82 an dem Gasauslass 56 des Probenbehälters 38 und/oder an die Vakuumquelle 80 angeschlossen werden.

Figur 4 zeigt die so geschaffene Grundstellung. Die Ventile 24, 48, 58, 64 sind geschlossen. Die Flüssigkeitskammer 44 ist mit einer Flüssigkeit F, vorzugsweise Sterilwasser, gefüllt.

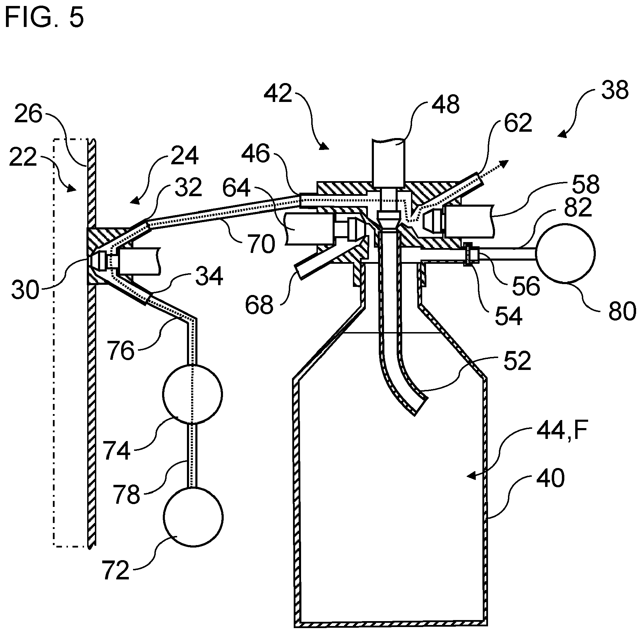

Figur 5 zeigt einen optionalen Reinigungsschritt. Der optionale Reinigungsschritt kann bspw. durchgeführt werden, wenn die Hygieneanforderungen an die Behälterbehandlungsanlage 10 sehr hoch sind, z. B. bei einer Ausführung des Probenentnahmeraums 22 als Reinraum, Sterilraum oder Aseptikraum.

Zunächst kann das Reinigungsventil 58 des Probenbehälters 38 geöffnet werden. Gleichzeitig oder im Anschluss daran kann das (weitere) Reinigungsventil 74 der Behälterbehandlungsanlage 10 geöffnet werden.

Reinigungsfluid, vorzugsweise Heißdampf, von der Reinigungsfluidquelle 72 kann das Probenentnahmeventil 24 durchströmen. Das Probenentnahmeventil 24 kann weiterhin geschlossen sein. Das Reinigungsfluid kann von dem Gaseinlass 34 zu dem Gasauslass 32 strömen. Das Reinigungsfluid kann das vorzugsweise geschlossene Ventilglied 36 umspülen. Das Reinigungsfluid kann das Probenentnahmeventil 24 reinigen, vorzugsweise sterilisieren. Bevorzugt kann das Reinigungsfluid den Gaseinlass 34, das Ventilglied 36 und den Gasauslass 32 reinigen, vorzugsweise sterilisieren.

Das Reinigungsfluid kann die Verbindungsleitung 70 durchströmen und reinigen, vorzugsweise sterilisieren.

Das Reinigungsfluid kann durch den Gaseinlass 46 des Probenbehälters 38 einströmen, das Ventilglied 50 und das Ventilglied 60 umspülen und aus dem Gasauslass 62 austreten. Das Reinigungsfluid kann den Gaseinlass 46, das Ventilglied 50, eine Fluidkammer des Ventilglieds 50, das Ventilglied 60 und eine Fluidkammer des Ventilglieds 60 reinigen, vorzugsweise sterilisieren.

Anschließend kann das Reinigungsventil 74 und bspw. gleichzeitig oder anschließend das Reinigungsventil 58 geschlossen werden.

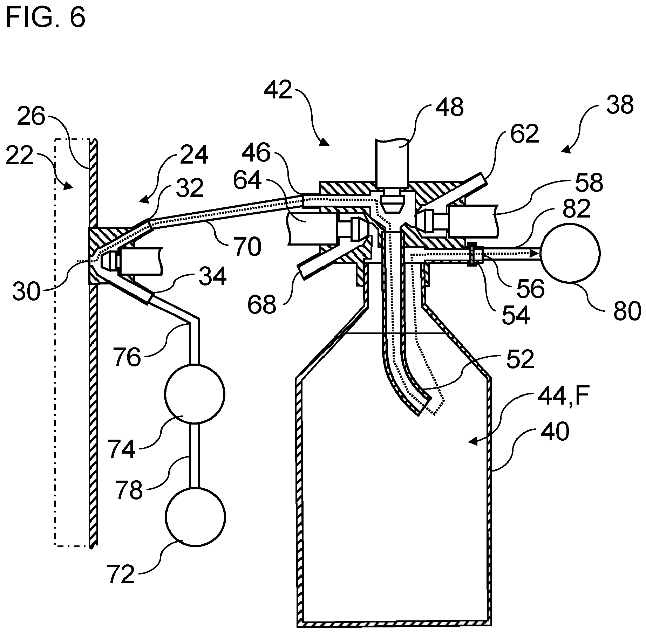

Die Figur 6 zeigt einen Probenentnahmeschritt. Eine Gasprobe wird aus dem Probeentnahmeraum 22 mittels des Probenentnahmeventils 24 entnommen.

Das Füllventil 48 des Probenbehälters 38 kann geöffnet werden. Ebenso kann das Probenentnahmeventil 24 geöffnet werden. Sofern vorhanden, kann die Vakuumquelle 80 Gas von dem Gasauslass 56 des Probenbehälters 38 ansaugen. Letztlich kann die Vakuumquelle 80 somit ein Strömen des Gases von dem Probenentnahmeraum 22 in den Probenbehälter 38 unterstützen.

Gas aus dem Probenentnahmeraum 22 kann durch das Probenentnahmeventil 24 strömen und das Probenentnahmeventil 24 beim Gasauslass 32 verlassen. Das entnommene Gas kann die Verbindungsleitung 70 durchströmen. Das entnommene Gas kann in den Gaseinlass 46 des Probenbehälters 38 einströmen. Das Gas kann durch das geöffnete Füllventil 48 in das Füllrohr 52 einströmen. Das Gas kann aus dem Füllrohr 52 in der Flüssigkeitskammer 44 einströmen. Das Gas kann die Flüssigkeit F in der Flüssigkeitskammer 44 durchströmen. Im Gas enthaltene Keime und/oder Verunreinigungen können dabei zumindest teilweise in die Flüssigkeit F übergehen bzw. von der Flüssigkeit F aus dem Gas gewaschen werden. Das Gas verlässt den Probenbehälter durch den Gasauslass 56 in Richtung zu der Vakuumquelle 80, sofern vorhanden.

Nach einer vorbestimmten Zeitdauer können die Ventile 24 und 48 wieder geschlossen und die Vakuumquelle 80, sofern vorhanden, ausgeschaltet werden. Der Probenbehälter 38 kann von der Verbindungsleitung 70 und der Verbindungsleitung 82, sofern vorhanden, getrennt werden. Der Gasfilter 54 bzw. ein entsprechend angeordnetes Ventil kann eine ungewünschte Verunreinigung der Flüssigkeit F verhindern, da kein Gas durch den Gasauslass zu der Flüssigkeitskammer 44 strömen kann. Der Probenbehälter 38 kann in ein Labor zur Untersuchung der Flüssigkeit auf Keime und/oder Verunreinigungen gebracht werden. Das Untersuchungsergebnis lässt einen Rückschluss auf Keime und/oder Verunreinigungen in der Gasprobe und somit im Inneren des Probenentnahmeraums 22 zu.

Es ist möglich, dass die Behälterbehandlungsanlage 10 ohne Einsatz des Probenbehälters 38 überwacht wird. Beispielsweise kann eine Verbindungsleitung von dem Probenentnahmeventil 24 zu einem Analysegerät führen (nicht in den Figuren dargestellt). Das Analysegerät kann Proben von dem Probenentnahmeventil 24 kontinuierlich oder in vorgebbaren Zeitabständen auf Keime und/oder Verunreinigungen überprüfen. Das Analysegerät kann jegliche geeignete Technik zum Analysieren der Probe anwenden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Probenentnahmeraums und/oder des Probenentnahmeventils des unabhängigen Anspruchs 1 offenbart.

**Bezugszeichenliste**

| | | | |
|---|---|---|---|
| 10 | Behälterbehandlungsanlage | 48 | Füllventil |
| 12 | Behälterbehandlungsvorrichtung | 50 | Ventilglied |
| 14 | Behälterbehandlungsvorrichtung | 52 | Füllrohr |
| 16 | Behälterbehandlungsvorrichtung | 54 | Gasfilter |
| 18 | Behälterbehandlungsvorrichtung | 56 | Gasauslass |
| 20 | Behälterförderer | 58 | Reinigungsventil |
| 22 | Probenentnahmeraum | 60 | Ventilglied |
| 24 | Probenentnahmeventil | 62 | Gasauslass |
| 26 | Außenwand | 64 | Sicherheitsventil |
| 28 | Durchgangsloch | 66 | Ventilglied |
| 30 | Gaseinlass | 68 | Gasauslass |
| 32 | Gasauslass | 70 | Verbindungsleitung |
| 34 | Gaseinlass | 72 | Reinigungsfluidquelle |
| 36 | Ventilglied | 74 | (weiteres) Reinigungsventil |
| 38 | Proben behälter | 76 | Verbindungsleitung |
| 40 | Behälterkörper | 78 | Verbindungsleitung |
| 42 | Ventileinrichtung | 80 | Vakuumquelle |
| 44 | Flüssigkeitskammer | 82 | Verbindungsleitung |
| 46 | Gaseinlass | F | Flüssigkeit |

## Patentansprüche

1. Behälterbehandlungsanlage (10) zum Behandeln von Behältern, aufweisend:
einen Probenentnahmeraum (22), in dem mindestens eine Behälterbehandlungsvorrichtung (12, 14, 16, 18) und/oder mindestens ein Behälterförderer (20) angeordnet ist; und
ein Probenentnahmeventil (24), das einen Gaseinlass (30), der mit einem Inneren des Probenentnahmeraums (22) verbunden ist, und einen Gasauslass (32) zum Entnehmen einer Gasprobe aufweist.

2. Behälterbehandlungsanlage (10) nach Anspruch 1, wobei:
der Probenentnahmeraum (22) eine Außenwand (26) aufweist und das Probenentnahmeventil (24) in oder an der Außenwand (26) angeordnet ist, wobei das Probenentnahmeventil (24) vorzugsweise ein Durchgangsloch (28) in der Außenwand (26) verschließt; und/oder
das Probenentnahmeventil (24) außerhalb von dem Probenentnahmeraum (22) angeordnet ist.

3. Behälterbehandlungsanlage (10) nach Anspruch 1 oder Anspruch 2, ferner aufweisend:
eine Reinigungsfluidquelle (72), vorzugsweise Sterilisationsfluidquelle oder Heißdampfquelle, wobei die Reinigungsfluidquelle (72) mit einem weiteren Gaseinlass (34) des Probenentnahmeventils (24) verbunden oder verbindbar ist, vorzugsweise unter Zwischenschaltung eines Reinigungsventils (74).

4. Behälterbehandlungsanlage (10) nach Anspruch 3, wobei:
das Probenentnahmeventil (24) in einer ersten Ventilstellung den Gaseinlass (30) des Probenentnahmeventils (24) mit dem Gasauslass (32) des Probenentnahmeventils (24) verbindet und in einer zweiten Ventilstellung den weiteren Gaseinlass (34) des Probenentnahmeventils (24) mit dem Gasauslass (32) des Probenentnahmeventils (24) verbindet sowie den Gaseinlass (30) des Probenentnahmeventils (24) blockiert.

5. Behälterbehandlungsanlage (10) nach einem der vorherigen Ansprüche, ferner aufweisend:
einen, vorzugsweise tragbaren, Probenbehälter (38), der einen Gaseinlass (46), der mit dem Gasauslass (32) des Probenentnahmeventils (24) verbunden oder verbindbar ist, und eine Flüssigkeitskammer (33) zum Füllen mit einer Flüssigkeit (F) aufweist.

6. Behälterbehandlungsanlage (10) nach einem der vorherigen Ansprüche, wobei der Probenbehälter (38) aufweist:
ein Reinigungsventil (58), das in einer ersten Ventilstellung den Gaseinlass (46) des Probenbehälters (38) mit einem Reinigungsauslass (62) des Probenbehälters (38) verbindet, vorzugsweise unter Umgehung der Flüssigkeitskammer (44), und in einer zweiten Ventilstellung eine Verbindung von dem Gaseinlass (46) des Probenbehälters (38) zu dem Reinigungsauslass (62) des Probenbehälters (38) blockiert.

7. Behälterbehandlungsanlage (10) nach einem der vorherigen Ansprüche, wobei der Probenbehälter (38) aufweist:
ein Füllventil (48), das in einer ersten Ventilstellung den Gaseinlass (46) des Probenbehälters (38) mit einem in die Flüssigkeitskammer (44) ragenden Füllrohr (52) verbindet und in einer zweiten Ventilstellung eine Verbindung von dem Gaseinlass (46) des Probenbehälters (38) zu dem Füllrohr (52) blockiert.

8. Behälterbehandlungsanlage (10) nach einem der vorherigen Ansprüche, wobei der Probenbehälter (38) aufweist:
ein Sicherheitsventil (64), das dazu ausgebildet ist, bei Überschreiten und/oder Unterschreiten eines vorbestimmten Gasdruckwerts, vorzugsweise in einem Gasvolumen oberhalb der Flüssigkeitskammer (44), zum Ablassen und/oder Einlassen von Gas selbsttätig zu öffnen.

9. Behälterbehandlungsanlage (10) nach einem der vorherigen Ansprüche, wobei der Probenbehälter (38) aufweist:
einen Gasauslass (56), der mit der Flüssigkeitskammer (44) unter Zwischenschaltung eines Gasfilters (54), vorzugsweise Sterilluftfilters, und/oder eines Ventils verbunden ist.

10. Behälterbehandlungsanlage (10) nach Anspruch 9, ferner aufweisend:
eine Vakuumquelle (80), vorzugsweise Vakuumpumpe, die zum Ansaugen von Gas mit dem Gasauslass (56) des Probenbehälters (38) verbunden oder verbindbar ist.

11. Behälterbehandlungsanlage (10) nach einem der vorherigen Ansprüche, wobei die mindestens eine Behälterbehandlungsvorrichtung (12, 14, 16, 18) aufweist:
eine Heizeinrichtung zum Erwärmen von Vorformligen für die Behälter;
eine Behälterherstellvorrichtung, vorzugsweise eine Behälterblasvorrichtung, zum Herstellen der Behälter;
eine Sterilisierungsvorrichtung zum Sterilisieren von Vorformlingen für die Behälter;
eine Füllvorrichtung, vorzugsweise ein Füllerkarussell, zum Füllen der Behälter; und/oder
eine Verschließvorrichtung, vorzugsweise ein Verschließerkarussell, zum Verschließen der Behälter.

12. Behälterbehandlungsanlage (10) nach einem der vorherigen Ansprüche, wobei:
der Probenentnahmeraum (22) ein Reinraum, ein Sterilraum oder ein Aseptikraum ist;
der Probenentnahmeraum (22) mit einem Überdruck beaufschlagt ist; und/oder
der Probenentnahmeraum (22) gekapselt ist.

13. Verfahren zum Überwachen einer Behälterbehandlungsanlage (10), vorzugsweise nach einem der vorherigen Ansprüche, wobei das Verfahren aufweist:
Entnehmen einer Gasprobe aus einem Probenentnahmeraum (22), in dem mindestens eine Behälterbehandlungsvorrichtung (12, 14, 16, 18) und/oder mindestens ein Behälterförderer (20) angeordnet ist, mittels eines Probenentnahmeventils (24), das einen Gaseinlass (30), der mit einem Inneren des Probenentnahmeraums (22) verbunden ist, und einen Gasauslass (32) zum Entnehmen der Gasprobe aufweist.

14. Verfahren nach Anspruch 13, ferner aufweisend:
Reinigen, vorzugsweise Sterilisieren, des Probeentnahmeventils (24) vor dem Entnehmen mit einem Reinigungsfluid, vorzugsweise Heißdampf.

15. Verfahren nach Anspruch 13 oder Anspruch 14, ferner aufweisend:
Leiten der entnommenen Gasprobe in eine Flüssigkeit (F), vorzugsweise Sterilwasser, eines, bevorzugt tragbaren, Probenbehälters (38), vorzugsweise mittels Ansaugen durch eine Vakuumquelle (80); und
Untersuchen der Flüssigkeit (F), in die das entnommene Gas geleitet wurde, auf Keime und/oder Verunreinigungen.
